(19) Europäisches Patentamt
European Patent Office
Office européen des brevets

(11) EP 4 632 644 A1

(12) EUROPEAN PATENT APPLICATION
published in accordance with Art. 153(4) EPC

(43) Date of publication:
15.10.2025 Bulletin 2025/42

(51) International Patent Classification (IPC):
G06Q 10/0639 (2023.01)

(21) Application number: 22967894.1

(52) Cooperative Patent Classification (CPC):
G06Q 10/0639

(22) Date of filing: 09.12.2022

(86) International application number:
PCT/JP2022/045443

(87) International publication number:
WO 2024/122049 (13.06.2024 Gazette 2024/24)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(71) Applicant: Chiyoda Corporation
Kanagawa 220-8765 (JP)

(72) Inventors:
• FURUICHI, Kazuya
Yokohama-shi, Kanagawa 220-8765 (JP)
• OKI, Eisuke
Yokohama-shi, Kanagawa 220-8765 (JP)
• YASUI, Takehito
Yokohama-shi, Kanagawa 220-8765 (JP)

(74) Representative: Ipsilon Benelux
76, rue de Merl
2146 Luxembourg (LU)

(54) **PROJECT PROGRESS PREDICTION METHOD, PROGRESS PREDICTION DEVICE, AND PROGRESS PREDICTION PROGRAM**

(57) [TASK] To make it possible to predict, at an intermediate point of a step in an ongoing project, a progress including subsequent due dates with simple processing.

[SOLUTION] A progress prediction method for a project including at least one step includes: acquiring data of a progress plan including a progress level of the step and an execution timing corresponding thereto; acquiring data of progress performance including a progress level of a completed part of the progress plan and an execution timing corresponding thereto; calculating, based on the data of the progress performance, a performance period from a reference time point of the step to a predetermined time point at which a predetermined progress level was achieved; calculating, based on the data of the progress plan, a plan period from the reference time point of the step to a time point at which a progress level same as the predetermined progress level is achieved; calculating, based on the performance period and the plan period, a progress evaluation index regarding progress of the step; and predicting, based on the progress evaluation index, data of the progress performance after the predetermined time point.

**Fig.7**

**Description**

TECHNICAL FIELD

The present invention relates to a progress prediction method, a progress prediction device, and a progress prediction program for a project for predicting future progress of an ongoing project.

BACKGROUND ART

In general, when executing a project, a delay to the original plan (namely, a deviation between the progress plan and the progress performance) may occur. In that case, the manager of the project needs to properly grasp the delay situation and to take measures to resolve it.

Conventionally, there is known a device which, to improve the accuracy of progress management of a project, extracts information necessary to calculate delay man-hours from a progress information management file of the project at every arbitrary point of time, stores the delay man-hours calculated based on a work schedule and a work performance, and visualizes the history of the delay man-hours (see Patent Document 1).

Also, there is known a device which, to assist formation of a project schedule plan, manages work step information, which manages schedule information and performance information for each work step, and deviation information, which indicates a reason for occurrence of a difference between the schedule information and the performance information (difference between the schedule and the performance in each work step), in association with each other, manages product file information having information of a storage in which a product file generated by each work step is stored, in association with the aforementioned work step information, and causes a display means to display the work step information, the deviation information, and the product file information mentioned above (see Patent Document 2).

PRIOR ART DOCUMENT(S)

PATENT DOCUMENT(S)

Patent Document 1: JP2011-204098A
Patent Document 2: JP2002-32225A

SUMMARY OF THE INVENTION

TASK TO BE ACCOMPLISHED BY THE INVENTION

In the conventional technologies described in the aforementioned Patent Documents 1 and 2, the progress status of the project is grasped with man-hours (for example, delay man-hours relative to the plan). Therefore, with these conventional technologies, it is difficult to easily predict the progress status (for example, how much deviation will occur between a predetermined due date in the original plan and a due date in the performance corresponding thereto) including future due dates (for example, an intermediate point, a completion date, and the like of a step of the processing target in the project) in the ongoing project.

Thus, the inventors of the present application carried out extensive research and as a result found that, by taking into account the relationship between a plan period and a performance period at an intermediate point (a time point at which a future progress is predicted) of a construction project or the like, it is possible to predict a future progress status with simple processing.

In view of the foregoing background, an object of the present invention is to provide a progress prediction method, a progress prediction device, and a progress prediction program for a project capable of predicting, at an intermediate point of a step in an ongoing project, a progress including subsequent due dates with simple processing.

MEANS TO ACCOMPLISH THE TASK

To achieve the above object, one aspect of the present invention provides a progress prediction method for a project, wherein the project includes at least one step, the progress prediction method comprising: acquiring data of a progress plan including a progress level of the step and an execution timing corresponding thereto; acquiring data of progress performance including a progress level of a completed part of the progress plan and an execution timing corresponding thereto; calculating, based on the data of the progress performance, a performance period from a reference time point of the step to a predetermined time point at which a predetermined progress level was achieved; calculating, based on the data of the progress plan, a plan period from the reference time point of the step to a time point at which a progress level same as the predetermined progress level is achieved; calculating, based on the performance period and the plan period, a progress evaluation index regarding progress of the step; and predicting, based on the progress evaluation index, data of the progress performance after the predetermined time point.

According to this aspect, at the predetermined time point (namely, an intermediate point) of the step in the ongoing project, the data of the progress performance after the predetermined time point (namely, a progress including due dates) can be predicted with simple processing.

In the above aspect, preferably, the progress evaluation index is a ratio of the plan period to the performance period.

According to this aspect, the progress evaluation index can be calculated with simple processing based on the ratio of the plan period to the performance period.

**In** the above aspect, preferably, a constant value is used as the progress evaluation index.

According to this aspect, the data of the progress performance after the predetermined time point can be predicted with simpler processing by using a constant value as the progress evaluation index.

**In** the above aspect, preferably, the data of the progress plan is determined by a first machine learning model, and the first machine learning model is a model that has learned a relationship between a progress level of a step in a past project and progress performance including an execution timing corresponding thereto.

According to this aspect, the data of the progress plan can be acquired with simple processing by using the first machine learning model.

**In** the above aspect, preferably, prediction of the data of the progress performance includes prediction of a completion date of the project, the progress prediction method comprising: changing settings of resources necessary for execution of the step after the predetermined time point in a case where the completion date of the project exceeds a preset reference completion date; and calculating a corrected evaluation index which is obtained by correcting the progress evaluation index based on the changed resources, wherein the prediction of the data of the progress performance is performed based on the corrected evaluation index.

According to this aspect, even in the case where the resources inputted into each step are changed at the predetermined time point of the step in the ongoing project, the data of the progress performance after the predetermined time point, which includes the completion date, can be predicted with simple processing.

**In** the above aspect, preferably, the resources necessary for execution of the step are determined by a second machine learning model, and the second machine learning model is a model that has learned a relationship between, resources inputted into a step in a past project and a work period of the step after the resources are inputted.

According to this aspect, resources necessary for each step (namely, resources after the change) can be acquired with simple processing by using the second machine learning model.

**In** the above aspect, preferably, the project includes, as the at least one step, a preceding first step and a subsequent second step, the progress prediction method comprising: acquiring information of at least one first milestone in the first step and information of a second milestone corresponding to each first milestone in terms of timing in the second step; acquiring an influence evaluation model that represents influence of relationship between data regarding each first milestone in the data of the progress performance of the first step and data regarding the corresponding second milestone in the data of the progress performance of the second step on the progress evaluation index of the second step;

calculating a corrected evaluation index which is obtained by correcting the progress evaluation index of the second step based on the influence evaluation model at the predetermined time point; and in prediction of the data of the progress performance regarding the second step, predicting, based on the corrected evaluation index, the data of the progress performance after the predetermined time point in the second step.

According to this aspect, in a case where multiple steps (the first step and the second step) are included in the project, the data after the predetermined time point (intermediate point) of the second step is predicted based on the corrected evaluation index that is corrected based on the influence evaluation model that represents the influence between the steps, and thus, the data of the progress performance after the predetermined time point can be predicted with simple processing in the subsequent second step which is influenced by the progress performance of the preceding first step.

**In** the above aspect, preferably, the progress prediction method comprises accumulating the data of the progress performance of each of multiple completed projects, wherein the first milestone and the second milestone are determined based on the data of the progress performance that has been accumulated.

According to this aspect, by using the data of the progress performance of the steps in the multiple completed projects, the first and second milestones can be determined with simple processing.

**In** the above aspect, preferably, each first milestone and each second milestone are determined based on the data of the progress performance of a project with a shortest work period of the second step among the multiple completed projects.

According to this aspect, appropriate first and second milestones can be determined with simple processing.

**In** the above aspect, preferably, the progress prediction method comprises accumulating the data of the progress performance of each of multiple completed projects, wherein the influence evaluation model is determined based on the data of the progress performance that has been accumulated.

According to this aspect, the model that represents the influence of the progress of the preceding first step on the progress evaluation index of the subsequent second step can be easily acquired based on the data of the progress performance of the steps in the multiple completed projects.

**In** the above aspect, preferably, the influence evaluation model is a third machine learning model that has learned a relationship between the data of the progress performance that has been accumulated and the progress evaluation index of the second step.

According to this aspect, the corrected evaluation index of the second step can be calculated with simple processing by using the third machine learning model.

In the above aspect, preferably, the corrected evaluation index is calculated based on a first milestone period from the reference time point to each first milestone, a second milestone period from the reference time point to each second milestone, and a difference between each first milestone period and each second milestone period corresponding thereto.

According to this aspect, the corrected evaluation index can be calculated with simple processing based on each first milestone period and each second milestone period as well as the difference between them.

In the above aspect, preferably, in a case where a delay has occurred in the timing of the first milestone in the data of the progress performance of the first step, the timing of the corresponding second milestone in the data of the progress plan of the second step is changed to after the timing of the first milestone in which the delay has occurred.

According to this aspect, in a case where a delay has occurred in the first milestone in the first step, it is possible to prevent a relative execution timing of the second milestone in the second step with respect to the first milestone from becoming unnecessarily early.

To achieve the above object, one aspect of the present invention provides a progress prediction device provided with a processor that executes processing for progress prediction of a project, wherein the project includes at least one step, the processor being configured to: acquire data of progress plan including a progress level of the step and an execution timing corresponding thereto; acquire data of a progress performance including a progress level of a completed part of the progress plan and an execution timing corresponding thereto; calculate, based on the data of the progress performance, a performance period from a reference time point of the step to a predetermined time point at which a predetermined progress level was achieved; calculate, based on the data of the progress plan, a plan period from the reference time point of the step to a time point at which a progress level same as the predetermined progress level is achieved; calculate, based on the performance period and the plan period, a progress evaluation index regarding progress of the step; and predict, based on the progress evaluation index, data of the progress performance after the predetermined time point.

According to this aspect, at the predetermined time point (namely, an intermediate point) of the step in the ongoing project, the data of the progress performance after the predetermined time point (namely, a progress including due dates) can be predicted with simple processing.

To achieve the above object, one aspect of the present invention provides a progress prediction program for causing a computer to execute processing for progress prediction of a project, wherein the project includes at least one step, the progress prediction program causing the computer to: acquire data of a progress plan including a progress level of the step and an execution timing corresponding thereto; acquire data of a progress performance including a progress level of a completed part of the progress plan and an execution timing corresponding thereto; calculate, based on the data of the progress performance, a performance period from a reference time point of the step to a predetermined time point at which a predetermined progress level was achieved; calculate, based on the data of the progress plan, a plan period from the reference time point of the step to a time point at which a progress level same as the predetermined progress level is achieved; calculate, based on the performance period and the plan period, a progress evaluation index regarding progress of the step; and predict, based on the progress evaluation index, data of the progress performance after the predetermined time point.

According to this aspect, at the predetermined time point (namely, an intermediate point) of the step in the ongoing project, the data of the progress performance after the predetermined time point (namely, a progress including due dates) can be predicted with simple processing.

EFFECT OF THE INVENTION

According to the above aspect, it is possible to predict, at an intermediate point of a step in an ongoing project, a progress including subsequent due dates with simple processing.

BRIEF DESCRIPTION OF THE DRAWINGS

[Figure 1] An overall configuration diagram of a progress prediction system for a project according to the first embodiment
[Figure 2] A functional block diagram of a progress prediction server according to the first embodiment
[Figure 3] An explanatory diagram showing one example of a progress plan regarding one step in a project
[Figure 4] An explanatory diagram regarding calculation of an SPI value
[Figure 5] An explanatory diagram regarding prediction of data of progress performance
[Figure 6] An explanatory diagram regarding the data of the progress performance after resource change of the step according to the first embodiment
[Figure 7] A flowchart showing a flow of progress prediction processing performed by the progress prediction server according to the first embodiment
[Figure 8] A functional block diagram of a progress prediction server according to the second embodiment
[Figure 9] An explanatory diagram showing processing for associating milestones in the progress plan of two steps included in the project

[Figure 10] An explanatory diagram showing influence of a preceding project on a subsequent project

[Figure 11] An explanatory diagram regarding the data of the progress performance after resource change of the steps according to the second embodiment

[Figure 12] A flowchart showing a flow of progress prediction processing performed by the progress prediction server according to the second embodiment

MODE(S) FOR CARRYING OUT THE INVENTION

In the following, a progress prediction method, a progress prediction device, and a progress prediction program for a project according to embodiments of the present invention will be described with reference to the drawings.

(First Embodiment)

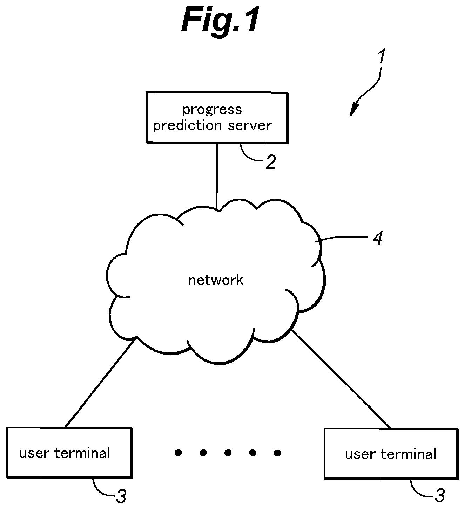

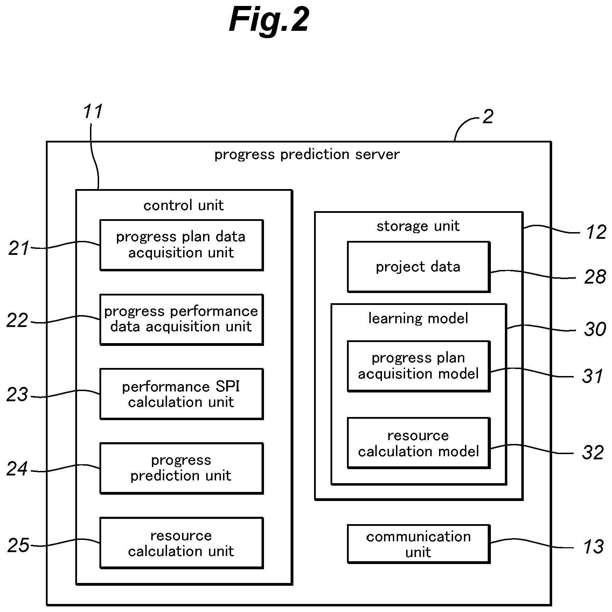

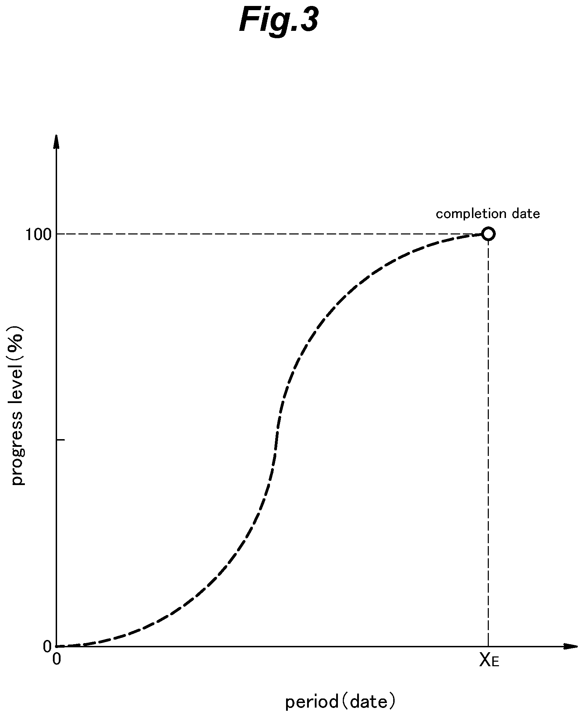

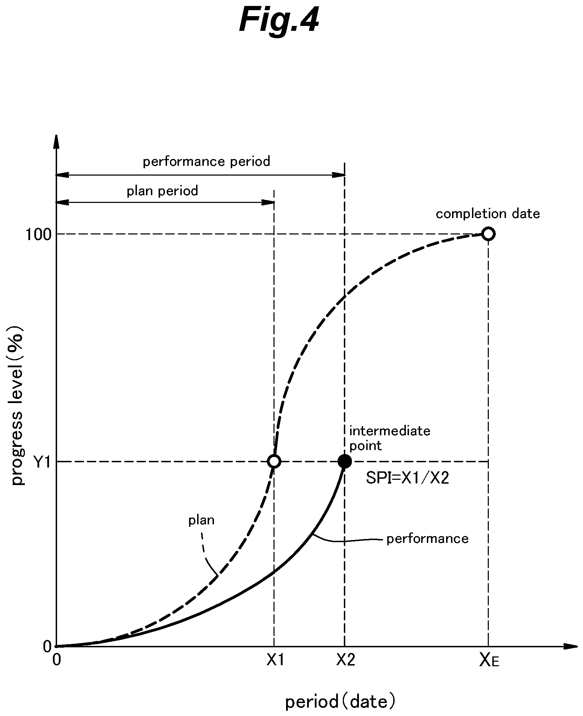

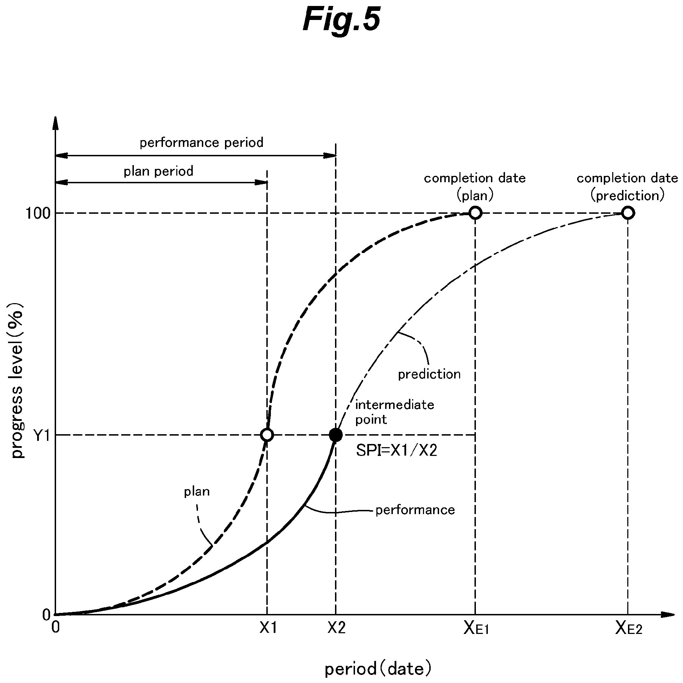

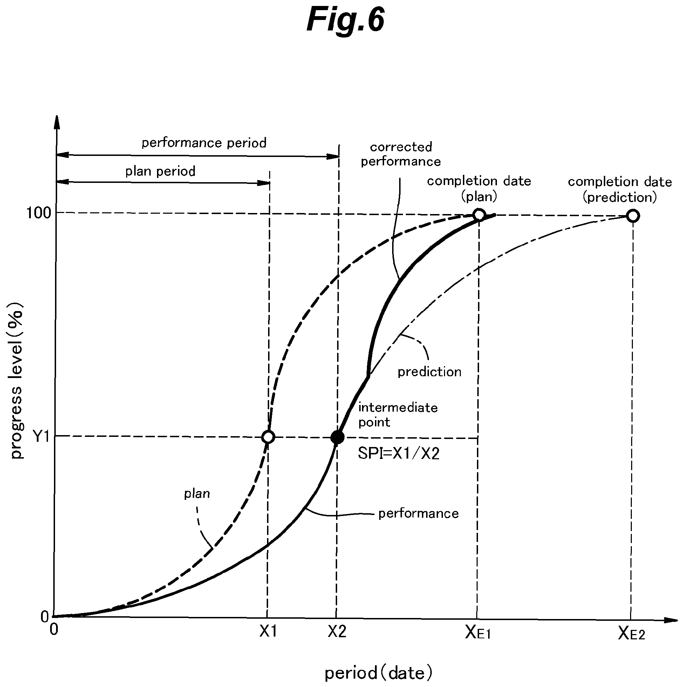

Figure 1 is an overall configuration diagram of a progress prediction system 1 for a project according to the first embodiment. Figure 2 is a functional block diagram of a progress prediction server 2 shown in Figure 1. Figure 3 is an explanatory diagram showing one example of a progress plan regarding one step in a project. Figure 4 is an explanatory diagram regarding calculation of an SPI value. Figure 5 is an explanatory diagram regarding prediction of data of progress performance. Figure 6 is an explanatory diagram regarding the data of the progress performance after resource change.

Note that the values of data shown in the graphs of Figures 3 to 6 (namely, the shape of the straight line or curved line represented by a set of data) are shown for the purpose of facilitating understanding of the present embodiment, and may not necessarily match the values of data (the shape of the straight line or curved line) in an actual project.

As shown in Figure 1, the progress prediction system 1 includes a progress prediction server 2 (one example of the progress prediction device) that performs processing for predicting future progress of an ongoing project and multiple user terminals 3 used by users such as the manager of the project. Each user terminal 3 is capable of communicating with the progress prediction server 2 via a network 4 such as the Internet. Each user terminal 3 is composed of a computer such as a PC, a tablet terminal, a smartphone, or the like.

In the present embodiment, an example in which the progress prediction system 1 is applied to a construction project will be described. Note, however, that the progress prediction system 1 (or the progress prediction server 2) may be applied to other arbitrary projects. Also, the present embodiment will be described by focusing on one step included in the project.

As shown in Figure 2, the progress prediction server 2 includes a control unit 11, a storage unit 12, and a communication unit 13.

In the control unit 11, a progress plan data acquisition unit 21 acquires data of the progress plan of the step included in the project.

For example, as shown in Figure 3, the data of the progress plan includes data of a progress level (see the vertical axis) of the step of the processing target and an execution timing (see the horizontal axis) corresponding thereto. In the present embodiment, the execution timing is the number of days elapsed at the time point when the corresponding progress level is achieved from a reference time point (for example, the project start date). In Figure 3, the data of the progress plan from the start date (period = 0 day, progress level = 0 %) to the completion date (period = $X_E$ days, progress level = 100 %) of the project is shown. **In** the construction project, the reference time point may be the design completion date, the date of confirmation of a blueprint by the client, or the date on which the materials necessary for the construction arrived at the construction site, for example.

**In** the construction project, the progress level of the step can be represented by the weight, length, volume, or the like regarding the constructed building (including a partially completed building), for example. For example, for a step related to the foundation work, the progress level can be determined by the volume of concrete actually used to the entire volume of concrete planned to be used (percentage of amount used). Note that for projects other than the construction project also, the progress level of the step can be determined by using a quantified index of the progress in a similar manner.

The progress plan data acquisition unit 21 can acquire the data of the progress plan based on the performance data of multiple projects executed in the past (hereinafter referred to as the "past performance data"). As the past projects, preferably, projects that are the same as or similar to the project of the processing target and that have been executed successfully without occurrence of a delay exceeding an acceptable tolerable range should be selected. Particularly, as the past projects, projects with performance data showing a shortest period from the start to the completion of the project (work period) without addition of resources should be selected. The data of the progress plan may be the same as the performance data of a past project or may consist of the performance data with part thereof being corrected by the user. The past performance data is prestored ((or accumulated) in the storage unit 12 as part of project data 28.

Also, the progress plan data acquisition unit 21 may acquire the data of the progress plan by using a progress plan acquisition model 31 (one example of the first machine learning model) which is a learning model obtained by machine learning. The progress plan acquisition model 31 is obtained by performing machine learning by using training data that indicates the relationship between the progress level of each step and the execution timing corresponding thereto in the past performance data. The progress plan acquisition model 31 is prestored in the storage unit 12 as one of the learning models 30 that can be used by the progress prediction server 2.

Note that in a case where there is no past performance data regarding a project same as or similar to the project of the processing target, the progress plan data may be data newly created for the project of the processing target. **In** this case, the progress plan data may be created based on the predicted progress and the execution timing corresponding thereto of each step included in the project of the processing target.

As shown in Figure 3, the progress plan data acquisition unit 21 can transmit the screen data related to the progress plan to the user terminal 3 upon request from the user terminal 3. Thereby, the user can confirm the progress plan of the project with the screen regarding the progress plan displayed on the display of the user terminal 3. Also, screen data regarding multiple candidates for the progress plan may be transmitted from the progress prediction server 2 to the user terminal 3, and the user may decide the progress plan data from the candidates for the progress plan by operating the user terminal 3.

A progress performance data acquisition unit 22 sequentially acquires, in relation to the ongoing project, the data of the progress performance of the completed part of the progress plan of the step of the processing target. Similarly to the progress plan data, the data of the progress performance includes data regarding the actual progress level of the step of the processing target and the actual execution timing corresponding thereto. The acquired data of the progress performance is sequentially stored in the storage unit 12 as part of the project data 28. Note that at least part of the data of the progress performance may be data inputted by the user.

A performance SPI (Schedule Performance Index) calculation unit 23 calculates an SPI value (one example of the progress evaluation index) as an evaluation index regarding the progress of the step of the processing target.

Here, a case where a delay has occurred in the progress performance at an intermediate point of the step from the above-described progress plan shown in Figure 3 is considered, for example. At this time, as shown in Figure 4 for example, the performance SPI calculation unit 23 calculates, at the intermediate point (the time point where the period = X2), a performance period (here, X2) from the reference time point of the step (here, the project start date) to the time point at which the predetermined progress level (here, Y1) was achieved (the intermediate point of the step in the project) based on the data of the progress performance (see the solid line). The performance period corresponds to the execution timing corresponding to the progress level Y1 in the progress performance.

Also, the performance SPI calculation unit 23 calculates, based on the data of the progress plan (see the broken line in Figure 3), a plan period (here, X1) to the time point at which a progress level same as the progress level (here, Y1) corresponding to the performance period is achieved. The plan period corresponds to the execution timing corresponding to the progress level Y1 in the progress plan.

Further, the performance SPI calculation unit 23 calculates the SPI value at the intermediate point based on the performance period and the plan period.

For example, the performance SPI calculation unit 23 can calculate the SPI value as the ratio of the plan period to the performance period according to the following formula (1).

$$\text{SPI value} = X1 / X2 \ldots (1)$$

X1: plan period
X2: performance period

In a case where the step is progressing as planned at the intermediate point (when the SPI value is calculated) of the step in the project, the performance period is the same as the plan period, and the SPI value becomes equal to 1. Also, in a case where the step is progressing ahead of the plan at the intermediate point, the SPI value becomes greater than 1, and in a case where a delay has occurred in the step as shown in Figure 4, the SPI value becomes less than 1.

A progress prediction unit 24 generates data of predicted progress performance by predicting the progress performance after the intermediate point based on the SPI value. For example, the progress prediction unit 24 can predict the progress performance (the progress level of the step and the execution timing corresponding thereto) after the intermediate point by assuming that the SPI value calculated at the intermediate point will remain constant thereafter.

As shown in Figure 5 (see the one-dot chain line), for example, the progress prediction unit 24 can predict the progress performance after the intermediate point (here, the period = X2) at which the SPI value is calculated in the aforementioned Figure 4.

Further, the progress prediction unit 24 determines whether there is a delay occurring in the project (step) based on the data of the predicted progress performance after the intermediate point. Whether there is a delay in the project can be determined based on whether the completion date of the step in the predicted progress performance exceeds a preset reference completion date, for example. As such a reference completion date, the completion date of the step of the processing target in the progress plan may be used, or the date obtained by adding a predetermined spare period (a period within which a delay is permitted) to the completion date of the step of the processing target in the progress plan may be used.

In a case where the progress prediction unit 24 determines that there is a delay occurring in the project, the progress prediction unit 24 further calculates a productivity (efficiency of production) of the project. The productivity is a ratio of an output to an input to the step of the processing target at the intermediate point (productivity = output / input). As the input, man-hours (number of persons × working hours) inputted into the step can be used. Also, as the output, the weight, length, volume, or the like regarding a constructed building (including a partially completed building) converted to man-hours can be used.

In a case where the calculated productivity is 1 (or its approximation), the progress prediction unit 24 determines that it is required to add necessary resources to the project to increase the SPI value. In the case of a construction project, the resources include, for example, the number of workers, the number of construction machines, etc. On the other hand, in a case where the calculated productivity is less than 1, the progress prediction unit 24 determines that it is necessary to consider revision of the progress plan (including change of the construction method). The progress prediction unit 24 can transmit the determination result of whether there is a delay occurring in the project and the value of the calculated productivity to the user terminal 3. Thereby, the user can recognize that addition of resources and revision of the progress plan are necessary.

In the case where it is determined by the progress prediction unit 24 that addition of resources is necessary, a resource calculation unit 25 calculates the resources necessary for the step after the intermediate point (namely, the resources for correcting the delay), and changes the resources set in the progress plan (namely, sets additional input of resources).

The resource calculation unit 25 can calculate the necessary resources by using a resource calculation model 32 (one example of the second machine learning model) which is a learning model obtained by machine learning. The resource calculation model 32 is obtained by performing machine learning by using training data that indicates the relationship between the resources inputted into each step and the work period of the step after the resources were inputted (including the number of days by which the execution timing was advanced due to the input of resources) in the past performance data. The resource calculation model 32 is prestored in the storage unit 12 as one of the learning models 30 that can be used by the progress prediction server 2.

The progress prediction unit 24 can calculate a corrected SPI value (one example of the corrected evaluation index) based on the resources changed by the resource calculation unit 25. Further, the progress prediction unit 24 can generate corrected prediction data of the progress performance by re-predicting the data of the progress performance after the intermediate point based on the corrected SPI value. Thereby, as shown in Figure 6 (see the thick solid line), the data of the progress performance after the correction shifts from the data of the progress performance predicted in the above-described Figure 5 (see the one-dot chain line) such that the work period (the period until the completion date) is shortened. As a result, by changing (additionally inputting) the resources at the intermediate point, the manager of the project can complete the step by the preset reference completion date of the project. Also, the resource calculation unit 25 may be configured to calculate, together with the additional resources that are needed to complete the step by the reference completion date of the project, the additional cost that is necessary to input the additional resources. In this case, the user can choose whether to correct the project progress by inputting the additional resources by comparing and considering the cost required for the additional resources and the risk caused by the delay in the completion date of the project.

The resource calculation unit 25 can transmit information regarding the necessary resources to the user terminal 3 to prompt the user to change the actual resources. At this time, the resource calculation unit 25 can transmit screen data regarding the corrected prediction data of the progress performance as shown in Figure 6 to the user terminal 3. Thereby, the user can confirm the usefulness of the addition of resources with the screen regarding the prediction data displayed on the display of the user terminal 3. Thereafter, if the user executes the resource change (addition of necessary resources) promptly, the progress performance similar to the corrected progress performance shown in Figure 6 is obtained.

The storage unit 12 may be configured by hardware such as a storage for storing data and the information necessary for processing by the progress prediction server 2.

The communication unit 13 may be configured by hardware including an antenna, a communication circuit, and the like for allowing the progress prediction server 2 to communicate with the user terminal 3 or the like via the network 4. The control unit 11 can also function as a communication control unit that controls the communication with the user terminal 3 or the like through the communication unit 13.

The progress prediction server 2 is composed of a computer provided with known hardware. The progress prediction server 2 is provided with known hardware such as one or more processors, memories, displays, input devices, network interfaces, storages, etc. At least part of the function of each of the units 21-25 of the control unit 11 may be realized by executing a predetermined control program (one example of the progress prediction program) by the processor. Note that in the progress prediction system 1, at least part of the function of the progress prediction server 2 described above may be realized by cooperation of multiple computers.

In the progress prediction system 1, the user can operate the progress prediction server 2 via the user terminal 3. Note, however, that the progress prediction server 2 may be directly operated by the user. In that case, the progress prediction server 2 may be standalone, and the user terminal 3 may be omitted.

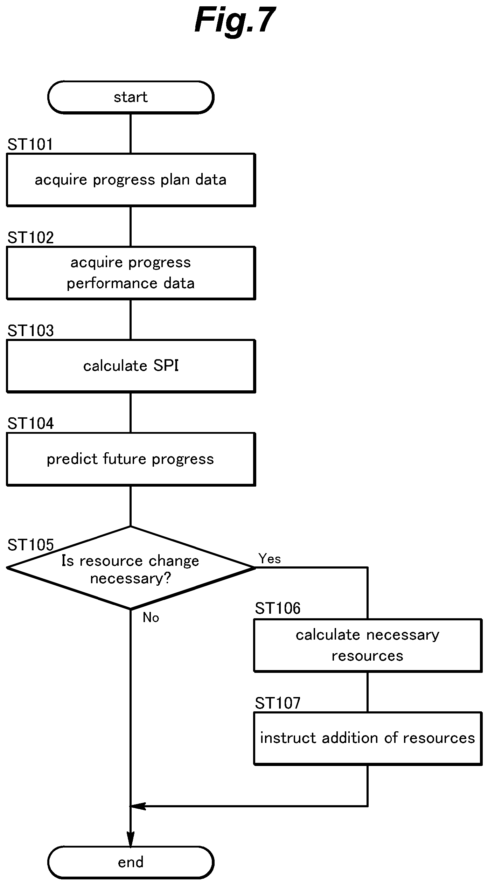

Figure 7 is a flowchart showing the flow of progress prediction processing performed by the progress prediction server 2 according to the first embodiment.

In the progress prediction processing, first, the progress prediction server 2 acquires the data of the progress plan and the data of the progress performance at the current time point (intermediate point) regarding the step of the processing target (ST101, ST102).

Next, the progress prediction server 2 calculates the SPI value at the current time point based on the performance period calculated based on the data of the progress performance and the plan period calculated based on the data of the progress plan (ST103).

Subsequently, the progress prediction server 2 predicts the progress performance in future (after the intermediate point) based on the data of the progress plan and the SPI value (ST104). Further, the progress prediction server 2 determines whether resource change (addition of resources) is necessary based on the prediction result of the future progress performance (ST105).

In the case where the resource change is not necessary (No in ST105), the progress prediction processing ends. On the other hand, in the case where the resource change is necessary (Yes in ST105), the progress prediction server 2 calculates the necessary resources (ST106) and instructs the user (the user terminal 3) to add the resources. Accordingly, the user executes the resource change in the project.

With the progress prediction system 1 according to the first embodiment described above, at a predetermined time point (namely, the intermediate point) of a step in an ongoing project, the data of the progress performance after the predetermined time point (namely, a progress including due dates) can be predicted with simple processing.

(Second Embodiment)

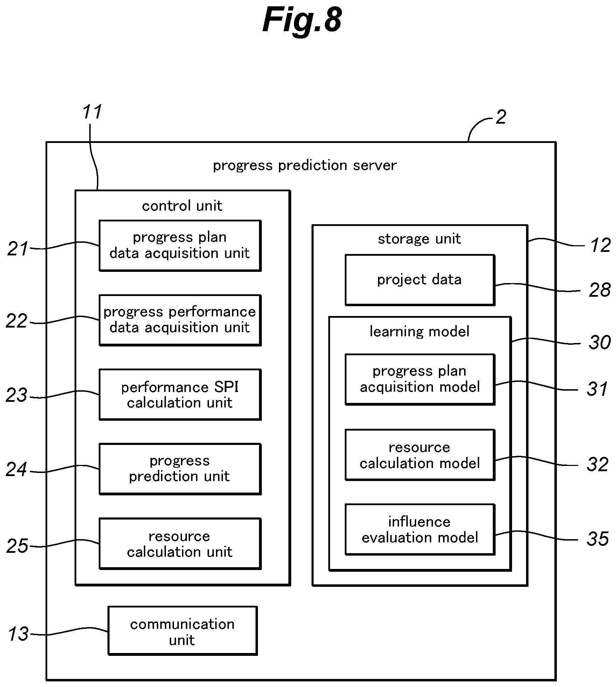

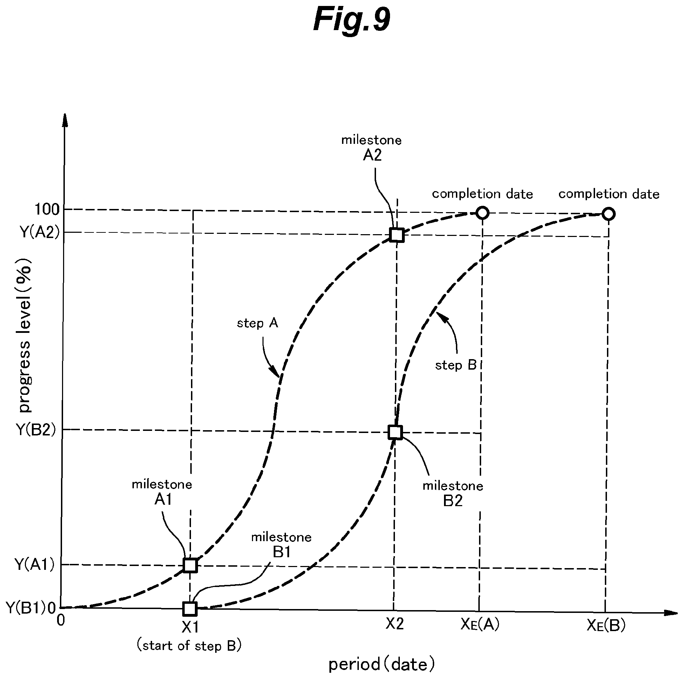

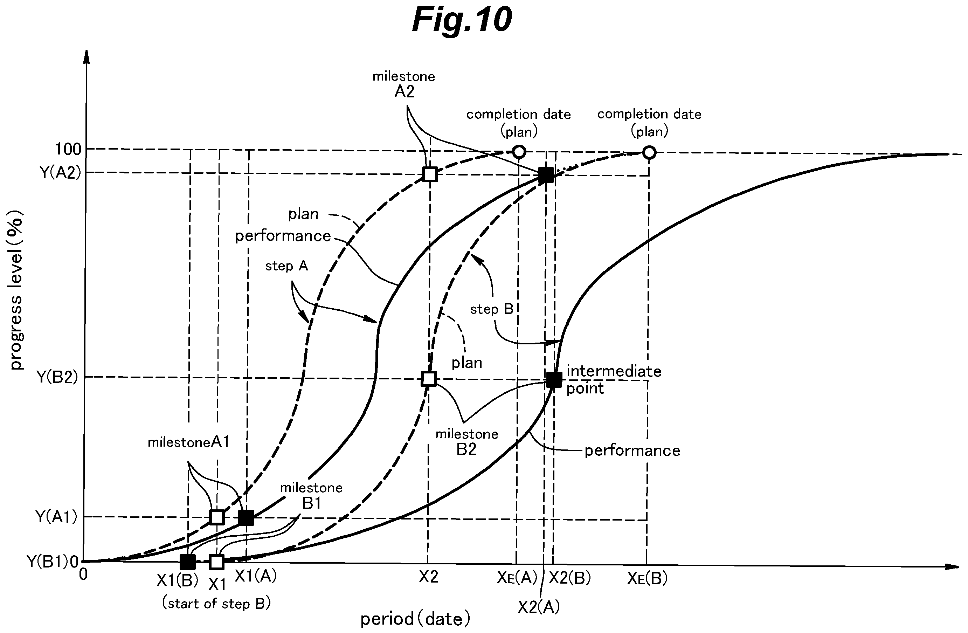

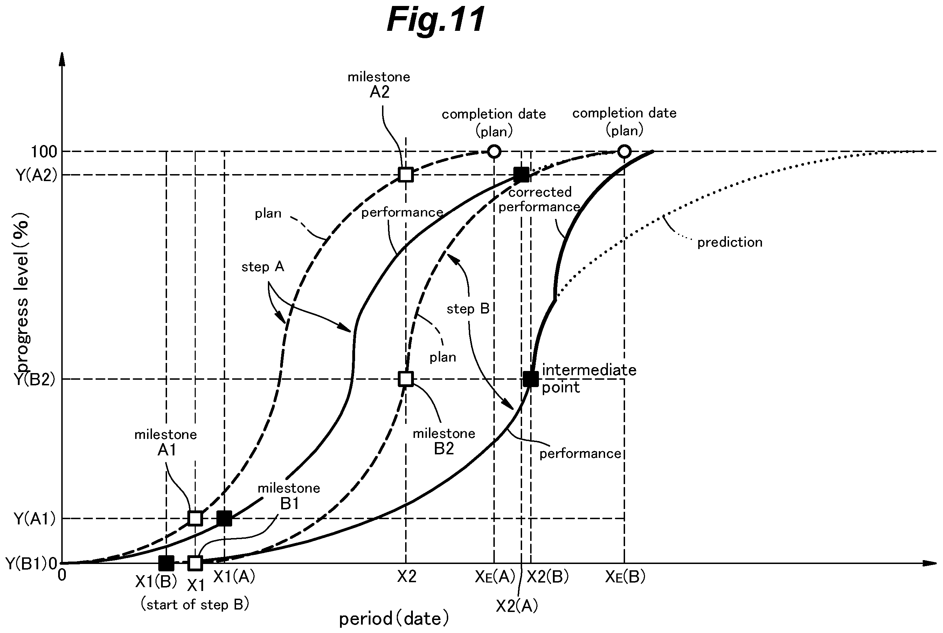

Figure 8 is a functional block diagram of a progress prediction server 2 according to the second embodiment. Figure 9 is an explanatory diagram showing processing for associating milestones in the progress plan of two steps included in the project. Figure 10 is an explanatory diagram showing influence of a preceding project on a subsequent project. Figure 11 is an explanatory diagram regarding the data of the progress performance after resource change of the steps.

Note that regarding the progress prediction system 1 according to the second embodiment, components similar to those of the first embodiment are denoted by the same reference signs and detailed description thereof is omitted. Also, in the progress prediction system 1 according to the second embodiment, matters not specifically mentioned below are the same as in the first embodiment.

In the first embodiment described above, description was made focusing on one of the steps included in a project, but in a case where multiple steps (here, two steps) are included in the project, the progress of the preceding step A (one example of the first step) may influence the progress of the subsequent step B (one example of the second step). The progress prediction system 1 according to the second embodiment is applied to such a project including multiple steps.

The subsequent step B needs to be started after the step A is started (namely, after the step A has progressed to a certain extent). In a construction project, for example, the step A is a step related to the foundation work, and the step B is a step related to construction of steel frames that are installed on the foundation provided by the foundation work. Also, for example, the step A may be a step related to the steel frame construction, and the step B may be a step related to construction of piping supported by the steel frames installed by the steel frame construction.

In the progress prediction system 1 (the progress prediction server 2), the progress prediction processing for the preceding step A can be executed in the same manner as in the first embodiment described above. On the other hand, since the progress prediction processing for the step B is influenced by the progress performance of the step A, the progress prediction processing for the step B needs to be executed by taking into account the influence.

As shown in Figure 8, the progress prediction server 2 according to the second embodiment includes a control unit 11, a storage unit 12, and a communication unit 13 similarly to the first embodiment.

In the control unit 11, the progress plan data acquisition unit 21, the progress performance data acquisition unit 22, and the performance SPI calculation unit 23 sequentially execute the same processing as in the first embodiment for each of the step A and the step B. Also, the progress prediction unit 24 executes the same processing as in the first embodiment for the step A.

The progress prediction unit 24 can correct the SPI value of the step B based on an influence evaluation model 35 (one example of the third machine learning model), which is a model representing the influence of the progress of the step A on the step B, and the prediction data of the progress performance regarding the step A generated by the progress prediction unit 24, and can predict the progress performance of the step B based on the corrected SPI value.

In the progress prediction system 1, a preparation phase for acquiring the influence evaluation model 35 is executed before the progress prediction processing. In the preparation phase, for example, processing for associating one or more milestones (predetermined points in the step) in the progress plan of the step A and one or more milestones (predetermined points in the step) in the progress plan of the step B is executed.

In the milestone association processing, as shown in Figure 9, for example, a milestone B1 at the starting time point (period = X1, progress level = Y(B 1)) of the step B and a milestone A1 at an intermediate point (period = X1, progress level = Y(A1)) of the step A corresponding thereto (namely, their execution timings overlap) are associated with each other. Further, for example, a milestone B2 at an intermediate point (period = X2, progress level = Y(B2)) corresponding to an inflexion point in the transition (curve) of the progress level of the step B and a milestone A2 at an intermediate point (period = X2, progress level = Y(A2)) of the step A corresponding thereto are associated with each other.

Such milestone association can be executed in accordance with the association of milestones adopted in a past same or similar project, for example. Particularly, the association of milestones is preferably executed in accordance with the association of milestones adopted in a past project successfully executed without occurrence of a delay exceeding an acceptable range. Particularly, such a past project is preferably a project with a shortest period from the start to the completion (work period) of the project.

Next, in the preparation phase, an influence evaluation model 35 that represents the influence of a change in the progress performance (delay of the due date, etc.) at the milestones A1, A2 (one example of first milestones) in the step A on the respectively associated milestones B1, B2 (one example of second milestones) in the step B is generated. In other words, the influence evaluation model 35 can be understood as a model that identifies a degree of propagation of the SPI value for calculating how the SPI value of the preceding step A propagates to the SPI value of the subsequent step B. The influence evaluation model 35 is stored in the storage unit 12 as one of the learning models 30 that can be used by the progress prediction server 2.

The influence evaluation model 35 may be a mathematical model or may be a machine learning model. For example, the influence evaluation model 35 may be constituted of a mathematical model. In such a mathematical model, for example, the SPI value of the step B (namely, the subsequent step) regarding the milestone of the evaluation target can be calculated based on the SPI value obtained in the step A (namely, the preceding step) which is being carried out simultaneously and in parallel with the step B. In that case, the SPI value of the step B may be a value obtained by multiplying the SPI value of the step A by a predetermined coefficient, a square root of the SPI value of the step A, or the like. With the mathematical model, in a case where, despite a delay in the step A, the step B was started without waiting for the corresponding milestone of the step A (namely, earlier than the scheduled start date), the SPI value of the step B can be calculated based on the plan period of the step B and the period by which the step B was started earlier. In that case, the SPI value of the step B may be calculated as a ratio of the plan period of the step B to a value obtained by adding the period by which the step B was started earlier to the plan period of the step B.

Also, the influence evaluation model 35 is obtained by performing machine learning by using training data that indicates the relationship between the data regarding each milestone of the preceding step (corresponding to the step A) (data of the progress level in the progress plan and the progress performance and the execution timing corresponding thereto) and the data regarding each corresponding milestone of the subsequent step (corresponding to the step B) in the past performance data, for example. More specifically, the influence evaluation model 35 can be obtained as follows.

For example, a situation where, as shown in Figure 10, the milestone B1 of the step B which corresponds to the milestone A1 (period = X1) of the step A in the progress plan is started earlier than the plan (started when period = X1(B)) in the progress performance is considered. The data of the progress plan of the step A and the step B in Figure 10 is the same as the data shown in Figure 9.

In Figure 10, the step A has not reached the milestone A1 (period = X1(A) (one example of the first milestone period)) (for example, the foundation for performing steel frame construction of the step B has not been completed) at the starting time point of the step B (period = X1(B) (one example of the second milestone period)), and thus, the progress of work in the step B is inhibited. As a result, the step B takes more time than the progress plan, and this may lead to extra resources or may cause a significant delay in the progress performance of the step B.

In this case, the SPI values regarding the milestones A1, A2, B1, and B2 in the step A and the step B are calculated as follows.

$$\text{SPI value (milestone A1)} = X1/X1(A)$$

$$\text{SPI value (milestone A2)} = X2/X2(A)$$

$$\text{SPI value (milestone B1)} = X1/X1(B)$$

$$\text{SPI value (milestone B2)} = X2/X2(B)$$

The influence evaluation model 35 can be obtained by performing machine learning by using training data that indicates the relationship between the SPI value regarding each milestone A1, A2 of the step A and the SPI value regarding the corresponding milestone B1, B2 of the step B mentioned above.

Also, in Figure 10, the difference $\Delta X$ between the execution timing of each milestone A1, A2 in the progress performance of the step A and the execution timing of the corresponding milestone B1, B2 in the progress performance of the step B (deviation between the plan and the performance) is calculated as follows.

$$\Delta X \text{ (milestones A1, B1)} = X1(B) - X1(A)$$

$$\Delta X \text{ (milestones A2, B2)} = X2(B) - X2(A)$$

The influence evaluation model 35 can be also obtained by performing machine learning by using training data that indicates the relationship between the aforementioned difference $\Delta X$ in the execution timing between each milestone A1, A2 of the step A and the corresponding milestone B1, B2 of the step B and the SPI value at the corresponding milestone B1, B2 of the step B.

Also, regarding the past performance data for performing machine learning, propriety of the setting of each milestone may be taken into account (namely, only the past performance data in which the milestones are properly set can be the learning target).

The progress prediction unit 24 can correct the SPI value of the step B based on the data of the progress performance (including the data of the predicted progress performance) regarding the step A and the influence evaluation model 35. Further, the progress prediction unit 24 can predict the progress performance after the intermediate point of the step B based on the corrected SPI value, and thereby can generate the data of the predicted progress performance. Accordingly, the data of the progress performance after the correction shifts such that the work period (the period until the completion date) is shortened after the intermediate point (period = X2(B)) of the step B as shown in Figure 11 (see the thick solid line). As a result, in the progress prediction system 1, it becomes possible to complete the step B by the reference completion date.

In the example shown in Figure 11, the progress performance of the step A is not corrected, but in a case where the progress performance of the step A is corrected (namely, in a case where resources are additionally inputted), the SPI value of the step B corrected by the influence evaluation model 35 also changes along with the correction of the progress performance of the step A.

Note that in the progress prediction system 1 according to the second embodiment, there may be a case where, when the data of the progress plan regarding the step B is acquired by the progress plan data acquisition unit 21, the step A has been already started and a delay has occurred in the step A. In such a case, the start timing (second milestone) of the step B in the data of the progress plan is set at an earlier timing than the corresponding first milestone of the step A.

Thus, in a case where the progress plan data acquisition unit 21 determines, based on the data of the progress performance of the step A, that a delay has occurred in the step A and the step A has not reached the first milestone, the progress plan data acquisition unit 21 can correct the acquired data of the progress plan regarding the step B such that the start timing (second milestone) of the step B is after the corresponding first milestone of the step A. In this case, the start timing of the step B is delayed, and the scheduled completion date of the entire project can be delayed than the original plan, but by executing the step B according to the progress plan after the correction (namely, by keeping the SPI value of the step B constant), extension of the work period required for the step B itself can be suppressed, and excessive cost can be prevented.

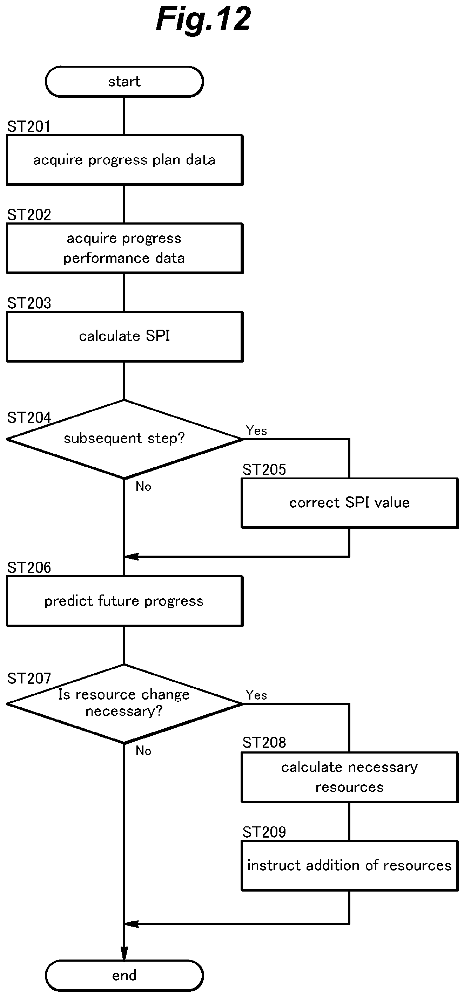

Figure 12 is a flowchart showing the flow of progress prediction processing performed by the progress prediction server 2 according to the second embodiment.

In the progress prediction processing, the progress prediction server 2 executes steps ST201-ST203 which are processing similar to steps ST101-ST103 shown in Figure 7, respectively.

Next, the progress prediction server 2 determines whether the processing target is the subsequent step (whether it is influenced by the preceding step) (ST204). In a case where the processing target is the subsequent step, the progress prediction server 2 corrects the SPI value, which has been calculated in step ST203, based on the data of the progress performance predicted regarding the preceding step and the influence evaluation model 35 (ST205). On the other hand, in a case where the processing target is not the subsequent step (is not influenced by the preceding step), the progress prediction server 2 uses the SPI value calculated in step ST203 as it is.

Thereafter, the progress prediction server 2 executes ST207-209 which are processing similar to steps ST105-ST107 shown in Figure 7, respectively.

With the progress prediction system 1 according to the second embodiment as described above, in the case where multiple steps (here, the step A and the step B) are included in the project, the data after the predetermined time point (intermediate point) of the step B is predicted based on the SPI value corrected based on the influence evaluation model that represents the influence between the steps, and thus, the data of the progress performance after the predetermined time point can be predicted with simple processing in the subsequent step B which is influenced by the progress performance of the preceding step A.

Concrete embodiments have been described in the foregoing, but the present invention can be modified in various ways without being limited to the above embodiments or modifications. Not all of the components of the progress prediction method, the progress prediction device, and the progress prediction program for a project shown in the above-described embodiment are necessarily indispensable, and they may be selectively adopted as appropriate without departing from the scope of the present invention by a person of ordinary skill in the art.

LIST OF REFERENCE NUMERALS

1:     progress prediction system
2:     progress prediction server (one example of progress prediction device)
3:     user terminal
4:     network
11:    control unit
12:    storage unit
13:    communication unit
21:    progress plan data acquisition unit
22:    progress performance data acquisition unit
23:    performance SPI calculation unit
24:    progress prediction unit
25:    resource calculation unit
28:    project data
30:    learning model
31:    progress plan acquisition model (one example of first machine learning model)
32:    resource calculation model (one example of second machine learning model)
35:    influence evaluation model (one example of third machine learning model)

**Claims**

1.  A progress prediction method for a project,

    wherein the project includes at least one step,
    the progress prediction method comprising:

    acquiring data of a progress plan including a progress level of the step and an execution timing corresponding thereto;
    acquiring data of progress performance including a progress level of a completed part of the progress plan and an execution timing corresponding thereto;
    calculating, based on the data of the progress performance, a performance period from a reference time point of the step to a predetermined time point at which a predetermined progress level was achieved;
    calculating, based on the data of the progress plan, a plan period from the reference time point of the step to a time point at which a progress level same as the predetermined progress level is achieved;
    calculating, based on the performance period and the plan period, a progress evaluation index regarding progress of the step; and
    predicting, based on the progress evaluation index, data of the progress performance after the predetermined time point.

2.  The progress prediction method for a project according to claim 1, wherein the progress evaluation index is a ratio of the plan period to the performance period.

3.  The progress prediction method for a project according to claim 2, wherein a constant value is used as the progress evaluation index.

4.  The method according to claim 1, wherein the data of the progress plan is determined by a first machine learning model, and
    the first machine learning model is a model that has learned a relationship between a progress level of a step in a past project and progress performance including an execution timing corresponding thereto.

5.  The progress prediction method for a project according to claim 1, wherein prediction of the data of the progress performance includes prediction of a completion date of the project,
    the progress prediction method comprising:

    changing settings of resources necessary for execution of the step after the predetermined time point in a case where the completion date of the project exceeds a preset reference completion date; and
    calculating a corrected evaluation index which is obtained by correcting the progress evaluation index based on the changed resources,
    wherein the prediction of the data of the progress performance is performed based on the corrected evaluation index.

6.  The method according to claim 5, wherein the resources necessary for execution of the step are determined by a second machine learning model, and
    the second machine learning model is a model that has learned a relationship between, resources inputted into a step in a past project and a work period of the step after the resources are inputted.

7.  The progress prediction method for a project according to claim 1, wherein the project includes, as the at least one step, a preceding first step and a subsequent second step, the progress prediction method comprising:

    acquiring information of at least one first milestone in the first step and information of a second milestone corresponding to each first milestone in terms of timing in the second step;
    acquiring an influence evaluation model that represents influence of relationship between data regarding each first milestone in the data of the progress performance of the first step and data regarding the corresponding second milestone in the data of the progress performance of the second step on the progress evaluation index of the second step;
    calculating a corrected evaluation index which is obtained by correcting the progress evaluation index of the second step based on the influence evaluation model at the predetermined time point; and

in prediction of the data of the progress performance regarding the second step, predicting, based on the corrected evaluation index, the data of the progress performance after the predetermined time point in the second step.

8. The progress prediction method for a project according to claim 7, comprising accumulating the data of the progress performance of each of multiple completed projects,

wherein the first milestone and the second milestone are determined based on the data of the progress performance that has been accumulated.

9. The progress prediction method for a project according to claim 8, wherein each first milestone and each second milestone are determined based on the data of the progress performance of a project with a shortest work period of the second step among the multiple completed projects.

10. The progress prediction method for a project according to claim 7, comprising accumulating the data of the progress performance of each of multiple completed projects,

wherein the influence evaluation model is determined based on the data of the progress performance that has been accumulated.

11. The method according to claim 10, wherein the influence evaluation model is a third machine learning model that has learned a relationship between the data of the progress performance that has been accumulated and the progress evaluation index of the second step.

12. The progress prediction method for a project according to claim 7, wherein the corrected evaluation index is calculated based on

a first milestone period from the reference time point to each first milestone,
a second milestone period from the reference time point to each second milestone, and
a difference between each first milestone period and each second milestone period corresponding thereto.

13. The progress prediction method for a project according to claim 7, wherein in a case where a delay has occurred in the timing of the first milestone in the data of the progress performance of the first step, the timing of the corresponding second milestone in the data of the progress plan of the second step is changed to after the timing of the first milestone in which the delay has occurred.

14. A progress prediction device provided with a processor that executes processing for progress prediction of a project,

wherein the project includes at least one step, the processor being configured to:

acquire data of progress plan including a progress level of the step and an execution timing corresponding thereto;
acquire data of a progress performance including a progress level of a completed part of the progress plan and an execution timing corresponding thereto;
calculate, based on the data of the progress performance, a performance period from a reference time point of the step to a predetermined time point at which a predetermined progress level was achieved;
calculate, based on the data of the progress plan, a plan period from the reference time point of the step to a time point at which a progress level same as the predetermined progress level is achieved;
calculate, based on the performance period and the plan period, a progress evaluation index regarding progress of the step; and
predict, based on the progress evaluation index, data of the progress performance after the predetermined time point.

15. A progress prediction program for causing a computer to execute processing for progress prediction of a project,

wherein the project includes at least one step, the progress prediction program causing the computer to:

acquire data of a progress plan including a progress level of the step and an execution timing corresponding thereto;
acquire data of a progress performance including a progress level of a completed part of the progress plan and an execution timing corresponding thereto;
calculate, based on the data of the progress performance, a performance period from a reference time point of the step to a predetermined time point at which a predetermined progress level was achieved;
calculate, based on the data of the progress plan, a plan period from the reference time point of the step to a time point at which a progress level same as the predetermined progress level is achieved;
calculate, based on the performance period and the plan period, a progress evaluation index regarding progress of the step; and predict, based on the progress evaluation index, data of the progress performance after the predetermined time point.

# Fig.1

# Fig.2

progress prediction server — 2

control unit — 11

21 — progress plan data acquisition unit

22 — progress performance data acquisition unit

23 — performance SPI calculation unit

24 — progress prediction unit

25 — resource calculation unit

storage unit — 12

project data — 28

learning model — 30

progress plan acquisition model — 31

resource calculation model — 32

communication unit — 13

# *Fig.3*

# Fig.4

## Fig.5

# Fig.6

# Fig.7

```
                    ┌──────────────┐
                    │    start     │
                    └──────┬───────┘
                           │
ST101  ┌───────────────────┴────────────────────┐
       │        acquire progress plan data       │
       └───────────────────┬────────────────────┘
                           │
ST102  ┌───────────────────┴────────────────────┐
       │           acquire progress              │
       │           performance data              │
       └───────────────────┬────────────────────┘
                           │
ST103  ┌───────────────────┴────────────────────┐
       │             calculate SPI               │
       └───────────────────┬────────────────────┘
                           │
ST104  ┌───────────────────┴────────────────────┐
       │          predict future progress        │
       └───────────────────┬────────────────────┘
                           │
ST105          ╱───────────┴───────────╲        Yes
             ╱   Is resource change       ╲────────────┐
             ╲       necessary?           ╱             │
               ╲───────────┬───────────╱               │
                          │ No                          │
                          │         ST106 ┌─────────────┴──────┐
                          │               │ calculate necessary│
                          │               │     resources      │
                          │               └─────────────┬──────┘
                          │                              │
                          │         ST107 ┌──────────────┴─────┐
                          │               │instruct addition of│
                          │               │     resources      │
                          │               └──────────────┬─────┘
                          │◄─────────────────────────────┘
                          │
                    ┌─────┴────────┐
                    │     end      │
                    └──────────────┘
```

## Fig.8

progress prediction server — 2

control unit — 11

- progress plan data acquisition unit — 21
- progress performance data acquisition unit — 22
- performance SPI calculation unit — 23
- progress prediction unit — 24
- resource calculation unit — 25

communication unit — 13

storage unit — 12

- project data — 28

learning model — 30

- progress plan acquisition model — 31
- resource calculation model — 32
- influence evaluation model — 35

# *Fig.9*

# Fig.10

milestone A2

completion date (plan)

completion date (plan)

100

Y(A2)

plan

performance

step A

step B

plan

Y(B2)

intermediate point

milestone B2

performance

milestoneA1

milestone B1

Y(A1)

Y(B1) 0

0

X1(B)    X1    X1(A)    X2    XE(A)  X2(B)    XE(B)

(start of step B)    X2(A)

period(date)

progress level（%）

EP 4 632 644 A1

23

Fig.11

# Fig.12

```
                    ┌──────────────┐
                    │    start     │
                    └──────────────┘
                           │
ST201   ┌──────────────────────────────────┐
        │     acquire progress plan data   │
        └──────────────────────────────────┘
                           │
ST202   ┌──────────────────────────────────┐
        │         acquire progress         │
        │        performance data          │
        └──────────────────────────────────┘
                           │
ST203   ┌──────────────────────────────────┐
        │          calculate SPI           │
        └──────────────────────────────────┘
                           │
ST204            ◇ subsequent step? ◇───── Yes
                           │
                          No          ST205 ┌──────────────────────┐
                           │                │   correct SPI value  │
                           │                └──────────────────────┘
                           │
ST206   ┌──────────────────────────────────┐
        │       predict future progress    │
        └──────────────────────────────────┘
                           │
ST207      ◇ Is resource change             Yes
             necessary?  ◇─────────────
                           │
                          No      ST208 ┌──────────────────────┐
                           │            │  calculate necessary │
                           │            │      resources       │
                           │            └──────────────────────┘
                           │      ST209 ┌──────────────────────┐
                           │            │ instruct addition of │
                           │            │      resources       │
                           │            └──────────────────────┘
                           │
                    ┌──────────────┐
                    │     end      │
                    └──────────────┘
```

## INTERNATIONAL SEARCH REPORT

| International application No. |
|---|
| **PCT/JP2022/045443** |

### A. CLASSIFICATION OF SUBJECT MATTER

*G06Q 10/0639*(2023.01)i
FI:  G06Q10/06 332

According to International Patent Classification (IPC) or to both national classification and IPC

### B. FIELDS SEARCHED

Minimum documentation searched (classification system followed by classification symbols)

G06Q10/00 - 99/00

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | JP 2021-131745 A (MITSUBISHI POWER LTD) 09 September 2021 (2021-09-09)<br>entire text, all drawings | 1-15 |
| A | JP 2000-322252 A (MITSUBISHI ELECTRIC CORP) 24 November 2000 (2000-11-24)<br>entire text, all drawings | 1-15 |
| A | JP 2007-018163 A (NS SOLUTIONS CORP) 25 January 2007 (2007-01-25)<br>entire text, all drawings | 1-15 |
| A | JP 2020-098424 A (HITACHI LTD) 25 June 2020 (2020-06-25)<br>entire text, all drawings | 1-15 |

☐ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **24 January 2023** | **31 January 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2022/045443**

| Patent document cited in search report | | | Publication date (day/month/year) | Patent family member(s) | | Publication date (day/month/year) |
|---|---|---|---|---|---|---|
| JP | 2021-131745 | A | 09 September 2021 | (Family: none) | | |
| JP | 2000-322252 | A | 24 November 2000 | (Family: none) | | |
| JP | 2007-018163 | A | 25 January 2007 | (Family: none) | | |
| JP | 2020-098424 | A | 25 June 2020 | US | 2022/0051148 A1 | |
| | | | | entire text, all drawings | | |
| | | | | WO | 2020/129742 A1 | |
| | | | | EP | 3901862 A1 | |
| | | | | CN | 112868037 A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2011204098 A
- JP 2002032225 A